# FASCICULE DE BREVET EUROPEEN

(11) **EP 3 166 838 B1**
(45) Date de publication et mention de la délivrance du brevet: **11.04.2018**
(21) Numéro de dépôt: 15732854.3
(22) Date de dépôt: 11.06.2015
(51) Int. Cl.: B62D 5/04

(54) **SYSTEME DE DIMINUTION DES A-COUPS DE COLONNE DE DIRECTION LORS DU REDEMARRAGE AUTOMATIQUE DU MOTEUR**
SYSTEM ZUR REDUZIERUNG VON LENKSÄULENRUCKEN WÄHREND DES AUTOMATISCHEN MOTORSTARTS
SYSTEM FOR REDUCING STEERING COLUMN JERKS DURING AUTOMATIC ENGINE START-UP

(30) Priorité: 09.07.2014 FR 1456605
(43) Date de publication de la demande: 17.05.2017
(73) Titulaire: Renault s.a.s, 92100 Boulogne-Billancourt (FR)
(72) Inventeur: JEANNIN, Aurélie, 91430 Igny (FR)
(86) Numéro de dépôt international: PCT/FR2015/051540
(87) Numéro de publication internationale: WO 2016/005669

(56) Documents cités:
- EP-A1- 2 163 457
- DE-A1- 10 050 377

## Description

### Domaine technique de l'invention

La présente invention concerne un système pour diminuer les à-coups générés sur la colonne de direction au redémarrage d'un moteur à combustion interne de véhicule automobile équipé d'une assistance de direction électrique ou électrohydraulique et d'un système d'arrêt/démarrage automatique du moteur.

L'invention concerne plus particulièrement une stratégie d'assistance de direction pour les phases de démarrage automatique du moteur à combustion interne suite à un arrêt automatique d'une séquence d'arrêt/démarrage automatique dudit moteur.

L'invention concerne également les véhicules automobiles équipés de moteur à combustion interne et de systèmes d'arrêt/démarrage du moteur.

### Etat de la technique

Dans but de réduire la pollution automobile et les rejets de gaz des moteurs à combustion interne ou thermiques des véhicules automobiles, des systèmes d'optimisation de la consommation sont mis en place dans lesdits véhicules. Un système parmi les plus connus et efficaces concerne un système d'arrêt/redémarrage automatique du moteur lors d'une immobilisation temporaire du véhicule, à un feu rouge par exemple. Ainsi lorsqu'un véhicule est proche d'une phase d'arrêt et que sa vitesse diminue pour devenir inférieure à un seuil défini, de l'ordre d'une dizaine de km/h, le système d'arrêt/redémarrage automatique ou « stop-and-start » en anglais arrête automatiquement le fonctionnement du moteur. Ensuite, sur une sollicitation du conducteur telle que l'appui sur une pédale d'accélérateur ou d'embrayage, le moteur redémarre de façon automatique sans sollicitation d'une clé de contact ou d'un bouton de contact. Ledit redémarrage automatique du moteur à combustion interne est effectué à l'aide d'un démarreur qui effectue un appel de courant depuis une source de courant comprenant une batterie.

On entend dans la suite du texte, par « arrêt automatique » ou « redémarrage automatique » du moteur une séquence d'arrêt/démarrage du moteur commandée par le système d'arrêt/redémarrage automatique ou « stop-and-start » en anglais.

On entend aussi par « réseau de bord » l'alimentation en énergie du réseau câblé du véhicule automobile.

Pendant la phase d'arrêt automatique, certaines fonctions du véhicule de confort ou de sécurité sont ou peuvent être maintenues comme la climatisation ou l'assistance de direction.

Cependant, ladite assistance de direction est assurée à l'aide d'un moteur électrique qui partage la même source de courant que le démarreur. Le fonctionnement dudit moteur électrique et donc l'assistance de direction peuvent alors être affectés par le fonctionnement du démarreur lors du redémarrage automatique du moteur.

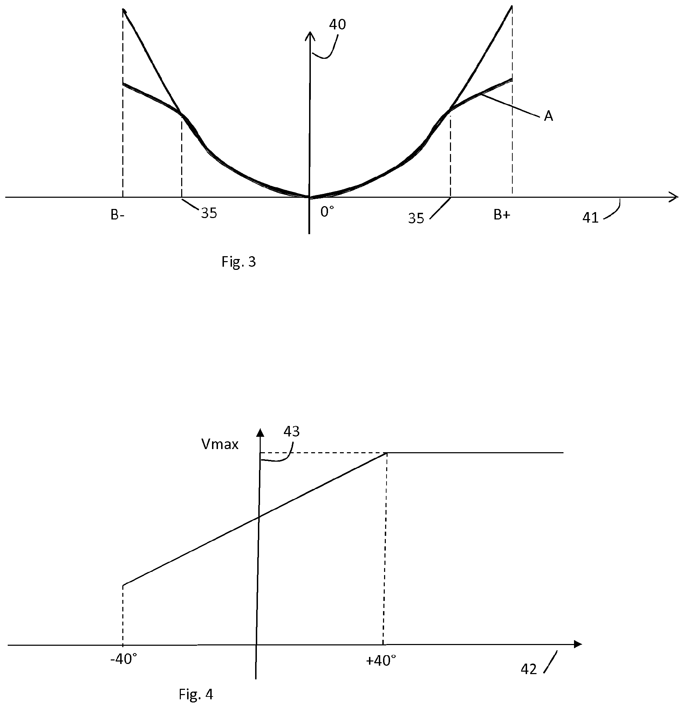

En effet, lors de l'appel de courant par le démarreur, il s'ensuit une chute de tension vue par le réseau de bord qui affecte de ce fait le moteur d'assistance électrique de direction notamment sur les points de fonctionnement présentant de forts besoins d'assistance. Selon la figure 3, le couple d'assistance de direction 40 nécessaire varie en fonction de l'angle au volant 41. Le besoin d'assistance de direction est plus important pour les positions de volant proches des butées B-, B+.

Ce phénomène de manque/diminution d'assistance de direction lié au démarrage du moteur se produit également au démarrage initial du moteur. Toutefois lors d'un démarrage initial, lorsque le conducteur tourne la clef de contact ou appuie sur le bouton de démarrage, aucune assistance de direction n'étant apportée auparavant lorsque le moteur est arrêté, le conducteur ne ressent alors aucune séquence de durcissement de ladite colonne de direction. En effet, l'effort pour tourner le volant est d'abord élevé sans l'assistance de direction, puis diminue lorsque le moteur est démarré avec la disponibilité de l'assistance de direction.

Il en est différemment pour les redémarrages automatiques consécutifs aux arrêts automatiques du moteur. Dans le cas où l'assistance de direction est conservée pendant la phase d'arrêt automatique du moteur, le conducteur est susceptible d'avoir un ressenti négatif de deux natures :
- un durcissement de la colonne de direction lors de la phase de redémarrage automatique,
- un à-coup volant lors du redémarrage automatique. En effet, lors d'un démarrage du moteur, le système de direction est adapté à remettre les roues droites c'est-à-dire dans l'alignement du corps du véhicule. Si lesdites roues sont braquées quand le moteur est arrêté, cette phase de remise en ligne desdites roues peut entrainer un à-coup sensiblement violent.

Une solution pour minimiser le ressenti de durcissement de la colonne de direction est une diminution de l'assistance pendant la phase d'arrêt automatique du moteur.

La publication JP-A1 2010173417 divulgue ainsi une diminution de l'assistance de direction pendant les phases d'arrêt automatique par l'application d'un coefficient de gain à l'assistance de direction.

Un inconvénient est que le gain est constant et s'applique quelles que soient les conditions de braquage du volant à l'arrêt et de l'environnement du véhicule.

Le ressenti de l'à-coup volant lors du redémarrage du moteur thermique est certes plus faible mais la diminution du ressenti n'est pas optimale. En effet, plusieurs paramètres doivent être pris en compte pour la diminution de l'assistance de direction lors d'un arrêt automatique du moteur dont notamment, l'angle de braquage des roues qui est un paramètre de premier ordre pour la définition du niveau d'assistance optimal. D'autres paramètres concernant l'environnement du véhicule sont également à prendre en compte.

De plus, le document DE10050377A1 divulgue le préambule de la revendication 1.

### Bref résumé de l'invention

Un but de l'invention est de pallier ces inconvénients et l'invention a pour objet une stratégie de diminution de l'assistance de direction lors d'une phase d'arrêt automatique du moteur dans une séquence d'arrêt/redémarrage automatique dudit moteur.

L'objet de l'invention est un procédé de gestion de l'assistance de direction de moteur à combustion interne de véhicule automobile comprenant :
- un système d'assistance électrique ou électrohydraulique de direction comportant une unité de contrôle,
- système d'arrêt/redémarrage automatique du moteur autorisant un maintien de l'assistance de direction pendant une phase d'arrêt automatique jusqu'au redémarrage automatique du moteur,
caractérisé en ce que le procédé autorise pendant une phase d'arrêt automatique du moteur d'une séquence d'arrêt/redémarrage automatique un niveau d'assistance de direction inférieur à une valeur de saturation qui est inférieure à une valeur nominale d'assistance, ledit niveau étant adapté à être conservé pendant la phase de redémarrage automatique du moteur.

On entend par valeur nominale d'assistance de direction la valeur d'assistance que doit fournir l'assistance de direction selon les vitesses du véhicule avec par exemple une puissance électrique largement suffisante.

De manière avantageuse, l'assistance de direction est réduite lors de la phase d'arrêt du moteur précédant un redémarrage automatique du moteur.

D'une part, l'assistance de direction est préservée afin de ne pas perturber le conducteur pendant ladite phase d'arrêt automatique.

D'autre part, le niveau d'assistance pendant ladite phase d'arrêt automatique du moteur, inférieur à une valeur de saturation qui est elle-même inférieure à une valeur nominale permet une moindre incidence d'une chute de tension du réseau lors du redémarrage automatique.

La conservation d'un niveau d'assistance de direction pendant la phase d'arrêt du moteur permet ainsi de diminuer les à-coups lors du redémarrage automatique du moteur notamment lorsque l'angle au volant est différent de 0 et le niveau de saturation permet d'assurer la continuité du niveau d'assistance lors de la phase de démarrage malgré la chute de tension du réseau de bord.

Selon d'autres aspects particuliers :
- la valeur de saturation est déterminée de manière itérative pendant la phase d'arrêt automatique dudit moteur précédant un redémarrage automatique.

Avantageusement, la valeur de saturation est déterminée de manière itérative tout au long de la phase d'arrêt automatique du moteur afin de prendre en compte les variations des paramètres influant sur le niveau d'assistance de direction, afin d'obtenir une valeur d'assistance de direction optimale lors du redémarrage automatique du moteur.

Un modèle de calcul de détermination de la valeur de saturation du couple d'assistance de direction est élaboré en fonction du modèle de véhicule et de ses caractéristiques techniques ainsi que de ses accessoires comprenant la batterie. Ledit modèle de calcul est validé pendant une campagne préalable de validation et de mesures. Le modèle de calcul est ensuite enregistré dans une mémoire d'une unité de calcul dudit véhicule
- le procédé autorise le niveau d'assistance de direction inférieur à la valeur de saturation d'assistance en-deçà d'un seuil de vitesse du véhicule.

Avantageusement, le niveau d'assistance de direction est conservé inférieur à la valeur de saturation lorsque la vitesse du véhicule est inférieure à un seuil de vitesse. Le niveau d'assistance de direction reste inférieur à une valeur de saturation déterminée pendant la phase d'arrêt automatique du moteur jusqu'à l'atteinte d'un seuil de vitesse du véhicule afin de ne pas perturber le conducteur. En effet, même lorsque le moteur est arrêté, le véhicule peut se déplacer et acquérir une certaine vitesse, notamment quand il se trouve sur une pente descendante. Au-delà dudit seuil de vitesse, le niveau d'assistance de direction suit alors les valeurs préconisées d'assistance de direction en fonction de différents paramètres dont la vitesse du véhicule.
- la valeur de saturation d'assistance de direction est déterminée en fonction de l'angle au volant.

De façon avantageuse, la valeur de saturation est déterminée en fonction de l'angle au volant. En effet, le niveau d'assistance de direction nécessaire est très important lorsque le volant est tourné vers ses butées et la remise en ligne des roues suite au redémarrage automatique peut être accompagnée d'à-coups violents.
- la valeur de saturation diminue lorsque le volant est tourné vers les butées.
- la valeur de saturation diminue lorsque le volant est tourné vers les butées au-delà d'un seuil d'angle volant.

De façon avantageuse, la valeur de saturation diminue lorsque le volant est tourné vers les butées, au-delà d'un seuil d'angle du volant et le niveau d'assistance de direction inférieur à ladite valeur de saturation diminue d'autant, le conducteur ressent alors une lourdeur de la direction à partir dudit seuil d'angle au volant et sera de ce fait moins incité à tourner le volant vers les butées pendant la phase d'arrêt du moteur. Ainsi, l'assistance de direction requise lors du redémarrage automatique sera moindre et sera peu ou pas affectée par la chute de tension du réseau. Le conducteur ne ressentira pas de gêne ou d'à-coups pendant les phases d'arrêt et de redémarrage automatiques du système d'arrêt/redémarrage automatique.
- la valeur de saturation est déterminée en fonction de la température du véhicule.

De façon avantageuse, la valeur de saturation de l'assistance de direction est déterminée en fonction de la température du véhicule, ladite température est un facteur important de la tension disponible depuis le système d'alimentation comprenant une batterie. La tension disponible affecte directement la valeur de saturation de l'assistance de direction.
- la détermination de la valeur de saturation est effectuée en fonction de différents paramètres compris dans une liste comportant le dimensionnement de la batterie et les efforts sur le train avant.

Avantageusement, la valeur de saturation est déterminée de façon précise en prenant en compte différents paramètres dans une liste comprenant le dimensionnement de la batterie et la masse sur le train avant du véhicule. Certains paramètres sont issus de mesures et intégrés dans la mémoire de l'unité de contrôle.

La valeur de saturation est calculée en fonction des paramètres du véhicule dont la puissance de la batterie ainsi que des efforts sur le train avant afin de minimiser le ressenti du conducteur lors du redémarrage automatique du moteur. Ainsi, plus la puissance de la batterie est importante, plus la valeur de saturation est proche d'une valeur nominale d'assistance de direction, voire supérieure à ladite valeur nominale. Il est également important de prévoir une assistance de direction plus importante si les efforts sur le train avant doivent être importants.
- le procédé comprend les étapes suivantes :
- prise en compte des valeurs des paramètres de fonctionnement issues des mesures,
- détermination de la valeur de saturation d'assistance de direction en fonction des valeurs des paramètres mesurés comprenant la température du véhicule et des valeurs de paramètres inscrits en mémoire.
- détermination de l'assistance nominale de direction.
- comparaison entre la valeur de saturation et la valeur nominale d'assistance de direction et prise en compte de la plus petite des deux valeurs comme valeur de saturation.
- détermination de la valeur d'assistance de direction.
- conservation d'une assistance de direction inférieure à la valeur de saturation pendant la phase d'arrêt automatique jusqu'au redémarrage automatique et jusqu'à l'atteinte d'un seuil de vitesse de roulage du véhicule.

### Brève description des figures

La figure 1 est une vue schématique de coupe longitudinale d'un véhicule automobile comportant un système d'arrêt/redémarrage automatique et un système d'assistance de direction.
La figure 2 est un logigramme représentant les différentes étapes du procédé selon l'invention.
La figure 3 est une courbe représentant l'assistance de direction nécessaire en fonction de l'angle au volant.
La figure 4 est une courbe représentant la tension de courant disponible en fonction de la température.

### Description détaillée des figures

Les descriptions qui suivent se réfèrent à l'axe longitudinal X.

Pour faciliter la compréhension du lecteur, les mêmes objets ou les objets ayant les mêmes fonctions référencés dans les différentes figures gardent les mêmes références.

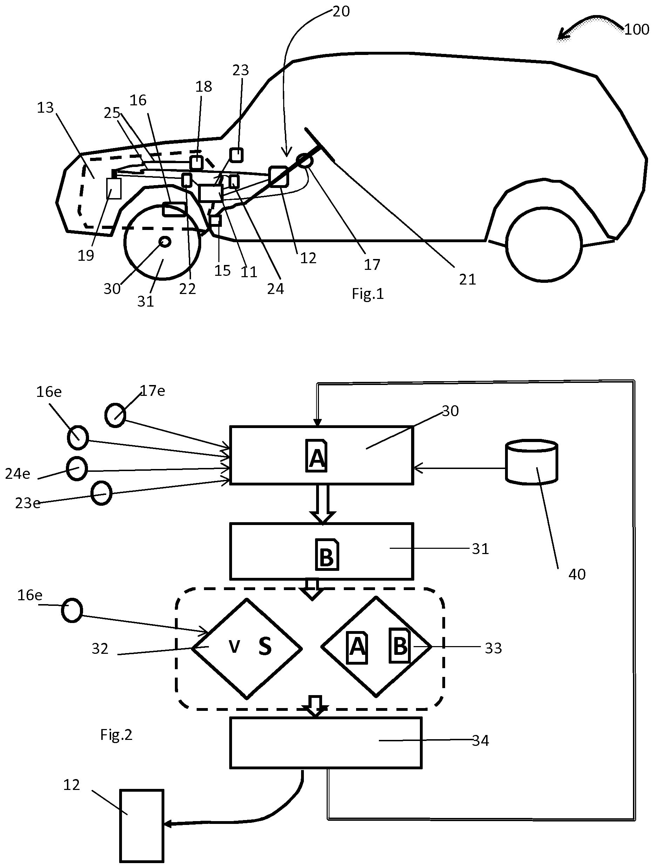

Ainsi que représenté en figure 1, un véhicule automobile 100 comprend une colonne de direction 20 commandée à une extrémité haute par un volant de direction 21 tenu par un conducteur (non représenté). Ladite colonne de direction est reliée à une assistance de direction comportant un moteur électrique ou électro-hydraulique d'assistance 12 de direction contrôlé par une unité de contrôle 11. Ledit moteur d'assistance de direction peut être disposé soit sur la colonne 20, soit sur une crémaillère 15 de la colonne de direction, soit déporté dans le cas d'un groupe électropompe.

Le véhicule automobile 100 comprend un moteur à combustion interne ou thermique 13 et un système d'arrêt et de redémarrage automatique ou « stop-and-start » en anglais destiné à réduire les émissions de gaz nocifs et de consommation de carburant. Ainsi, par exemple, lorsque le véhicule est en arrêt momentané ou lorsque ledit véhicule ralentit pour s'arrêter et se trouve sous un seuil de vitesse, le système d'arrêt et redémarrage automatique peut autoriser un arrêt automatique du moteur thermique en fonction de conditions spécifiques d'arrêt automatique. Il peut autoriser ensuite un redémarrage automatique du moteur, consécutif audit arrêt, suite par exemple à une sollicitation de la part du conducteur du véhicule, ladite sollicitation est comprise dans une liste d'actions comprenant un appui sur la pédale d'accélération ou d'embrayage pour les véhicules avec une commande de vitesses manuelle.

L'unité de contrôle 11 est reliée à des moyens de mesures comprenant des moyens de captation de la charge 22 d'une batterie 19, des moyens de captation de la température 23 du moteur 13 du véhicule et de l'unité de contrôle 11 elle-même, des moyens de captation 24 du fonctionnement dudit moteur, des moyens de mesure de la vitesse 16 dudit véhicule et aussi des moyens de captation 17 de l'angle du volant. Avec les différentes mesures, ladite unité de contrôle 11 est apte à délivrer des commandes au moteur 12 d'assistance de direction afin de moduler l'assistance de direction.

Afin de ne pas perturber le conducteur pendant l'arrêt automatique du moteur, l'assistance de direction est maintenue pendant toute la phase d'arrêt automatique du moteur thermique 13 jusqu'au redémarrage automatique. En effet, l'absence d'assistance de direction conjuguée avec la coupure du moteur thermique peut entrainer une incompréhension du conducteur sur le comportement du véhicule.

Toutefois, lors du redémarrage automatique, une chute de tension est perçue dans le réseau de bord du véhicule, due à l'appel de courant par le démarreur 18. Le moteur 12 d'assistance de direction, ne disposant plus d'une énergie suffisante, peut ne plus être en mesure de fournir une assistance nominale pour éviter le durcissement de la colonne de direction 20 ou les à-coups éventuels de remise des roues vers une position neutre ou en ligne. Le conducteur peut alors avoir un ressenti désagréable.

Pour pallier le durcissement de la colonne de direction consécutif à la chute de tension vue par le moteur d'assistance de direction 12, des solutions peuvent être de sur-dimensionner la batterie ou d'intégrer des composants d'alimentation spécifiques ; lesdites solutions sont donc couteuses pour le confort apporté.

Le besoin d'assistance de direction est d'autant plus important que le volant 21 est braqué vers les butées. En effet, sur la figure 3 est représenté en ordonnée le couple d'assistance de direction 40 requis en fonction de l'angle volant 41 en abscisse ; ledit couple d'assistance s'accroit rapidement et de façon sensiblement parabolique depuis une position neutre correspondant au 0° volant vers les butées B-, B+ de l'angle de braquage. Ledit couple d'assistance de direction est lié à une force de rappel des roues pour ramener lesdites roues depuis une position de braquage vers la position neutre. Ladite force dépend essentiellement de l'architecture du train avant du véhicule, de la masse sur ledit train avant 30 ainsi que de l'angle de braquage des roues avant 31.

De violents à-coups dans la colonne de direction lors du redémarrage automatique sont donc susceptibles d'être ressentis par le conducteur notamment si les roues sont fortement braquées pendant ladite phase d'arrêt automatique du moteur. En effet, lors du redémarrage, les roues sont ramenées naturellement depuis la position de braquage vers la position neutre entrainant un retour de volant dans le même sens. Ce déplacement des roues est effectué d'autant plus violemment que les roues sont braquées vers les butées B- ou B+. L'effort nécessaire pour ramener les roues en position neutre se traduit par un à-coup au volant 21 ressenti par le conducteur.

Pour pallier ledit à-coup de retour de volant, une solution est de bloquer la colonne de direction. Cette solution peut toutefois entrainer des éventuels blocages de direction si toutes les conditions ne sont pas vérifiées, incompatibles avec les exigences de sureté fonctionnelle de la colonne de direction.

L'objet de l'invention consiste à réduire le niveau d'assistance de direction à un niveau optimal lors d'une phase d'arrêt automatique du moteur notamment sur les points de braquages extrêmes. L'assistance de direction reste disponible pendant toute la phase d'arrêt automatique du moteur mais elle reste inférieure à une valeur de saturation. Ladite valeur de saturation est définie pour que la chute de tension lors du redémarrage automatique n'affecte pas ou peu le niveau d'assistance de direction apporté pendant la phase d'arrêt automatique afin de pallier un durcissement éventuel de la direction ou un à-coup de la direction susceptible d'être ressenti par le conducteur.

Ladite valeur de saturation est différente à différents points de fonctionnement pour conserver un confort maximal au conducteur. Ladite valeur de saturation est ainsi réduite sur les points nécessitant un fort couple d'assistance, ce qui est le cas lorsque les roues sont fortement braquées, notamment vers des butées.

Ladite valeur de saturation est inférieure à la valeur nominale d'assistance de direction et le conducteur est alors susceptible de ressentir un durcissement progressif en tournant le volant vers les butées lorsque le moteur est arrêté. Ledit conducteur est alors incité à ne pas braquer de façon excessive les roues pendant l'arrêt automatique du moteur. La consommation de courant par l'assistance de direction nécessaire pour contrer l'à-coup lors du redémarrage automatique du moteur sera de ce fait réduite. La chute de tension du réseau de bord n'est alors pas susceptible d'entrainer le ressenti désagréable du conducteur.

Ainsi que représenté en figure 3, l'assistance de direction 40 peut être diminuée à partir d'un seuil d'angle de volant 35 pour atteindre par exemple 60% du besoin d'assistance de direction lorsque le volant est tourné à l'atteinte desdites butées B-, B+. L'assistance de direction peut être également réduite selon d'autres modes de réalisation, de façon régulière depuis un point proche du point 0° volant jusqu'auxdites butées ou être constante égale à une valeur d'assistance maximale à partir dudit seuil d'angle volant.

Lorsque le moteur est redémarré de façon automatique, les roues n'étant pas braquées au maximum, l'à-coup du volant généré par la remise en ligne des roues avant 31 est moins important et le maintien de l'assistance de direction à un niveau de saturation permet alors de réduire davantage le niveau dudit à-coup du volant.

Ladite valeur de saturation de l'assistance de direction est modifiée en prenant en compte des paramètres du véhicule ainsi que des valeurs issues de mesures instantanées.

Un modèle de calcul de détermination de la valeur de saturation est élaboré en fonction du type de véhicule en tenant compte des caractéristiques techniques dudit véhicule et de ses accessoires comprenant la batterie 19 et le câblage électrique 25 ainsi que des paramètres de fonctionnement dudit véhicule. Le niveau d'assistance optimal est évalué avec la prise en compte :
- de paramètres spécifiques au véhicule dans une liste comprenant au moins la masse sur le train avant 30 du véhicule, les caractéristiques du démarreur 18 et les efforts train avant 30 en fonction de l'angle volant 21, des frottements internes des éléments du châssis qui comprennent le train, la colonne de direction 20 et la crémaillère de direction 15,
- de paramètres issus de mesures instantanées portant sur le véhicule dans une liste comprenant des paramètres portant sur le véhicule comprenant la température du véhicule,
- et des paramètres associés au fonctionnement du véhicule dans une liste comprenant la vitesse du véhicule, l'angle de braquage du train avant et des paramètres impactant directement le fonctionnement de l'assistance de direction tels que la charge de la batterie 19, le vieillissement du câblage 25 notamment entre la batterie et le moteur 12 d'assistance de direction. La charge de la batterie ainsi que l'âge de ladite batterie 19 et du câblage 25 électrique peuvent affecter directement le fonctionnement du moteur d'assistance de direction et donc le niveau de maintien de l'assistance de direction. Une partie de la puissance électrique disponible étant affectée audit maintien, plus la batterie ou le câblage est âgé, moins le niveau de maintien d'assistance sera élevé afin de préserver des valeurs de puissance accessible minimales pour le démarreur.

Selon la figure 2, un calcul selon ledit modèle de calcul est effectué pendant une phase d'arrêt automatique du moteur pour déterminer la valeur de saturation de l'assistance de direction et donc de l'assistance de direction disponible lors du redémarrage automatique du moteur. Ce calcul est renouvelé de façon itérative pendant toute la phase d'arrêt automatique du moteur avec de nouvelles mesures desdits paramètres.

Le système de gestion de l'assistance de direction comprend donc :
- des moyens de captation 17 de l'angle volant,

De manière préférentielle, ainsi que représenté en figure 3, le besoin d'assistance de direction varie en fonction de l'angle du volant sensiblement de manière parabolique. Plus le volant est braqué vers les butées B- et B+, plus l'assistance de direction doit être importante. Selon l'invention, ladite assistance de direction reste inférieure à la valeur de saturation et ladite valeur de saturation diminue avec l'accroissement de l'angle au volant. Ladite valeur de saturation peut diminuer de manière régulière depuis le point 0 volant ou à partir d'un seuil d'angle au volant. La diminution d'assistance peut par exemple atteindre 40% du besoin d'assistance de direction à l'atteinte des butées.
- des moyens de mesure de vitesse 16 du véhicule,
- des moyens de captation 22 de la charge de la batterie 19,
- des moyens de captation 23 et de détermination de la température du véhicule,
- et des moyens de captation du fonctionnement 24 du moteur.

Les valeurs issues des mesures sont adressées à l'unité de calcul 11 afin de déterminer une valeur de saturation de l'assistance de direction.

La température du véhicule est issue d'une estimation prenant en compte des mesures de température du moteur 13 et de l'unité de contrôle 11. Pour ce faire, les moyens de captation 23 comportent de manière préférentielle des capteurs de température disposés au niveau du moteur 13 ainsi que dans l'unité de contrôle 11 et un capteur de fonctionnement 24 du moteur est également nécessaire. Les valeurs de température mesurées sont ensuite adressées à l'unité de contrôle 11 pour être introduites dans un modèle de détermination de la température dont le résultat est la valeur de température du véhicule, ladite valeur est prise en compte pour tous les systèmes dans le véhicule ayant recours à la valeur de température.

Une campagne de validation est effectuée au préalable pour corréler les résultats issus du modèle de calcul selon une liste de paramètres de fonctionnement et de déterminer :
- les points au-delà desquels un à-coup volant lors d'un redémarrage automatique du moteur est jugé inacceptable. Selon un angle au volant donné, le redémarrage du moteur engendre une remise en ligne des roues 31 et on peut alors mesurer le niveau de ladite force de remise en ligne au niveau du volant. De la même façon que pour caractériser des lois de contrôle de la direction assistée, on mesure des efforts de remise au neutre ou en ligne des roues avant en fonction de différents angles de braquage. Les valeurs mesurées permettent de déterminer un niveau minimal d'assistance de direction pour éviter des à-coups acceptable par le conducteur lors du redémarrage automatique du moteur selon différentes valeurs d'angle du volant. Les paramètres pris en compte comprennent l'angle du volant, le couple volant, la température du véhicule et la masse du véhicule sur le train avant.
- des valeurs de tension minimale disponible pour un modèle de batterie 19. Ladite valeur de tension minimale disponible détermine un niveau minimal de couple d'assistance en fonction de la masse du train avant du véhicule, des frottements internes des éléments du châssis tels que la colonne de direction et la crémaillère de direction, de la température du véhicule, de l'angle volant et du couple conducteur.

La liste de paramètres pris en compte lors de la validation comprend la masse sur le train avant, la température du véhicule, l'angle au volant ainsi que la valeur de tension da la batterie.

Ainsi, par exemple pour évaluer l'influence du paramètre de la masse du train avant 30 du modèle de véhicule, on prendra un véhicule du même modèle avec la charge minimale sur le train avant. La masse sur le train avant est ensuite augmentée par l'apport de charges supplémentaires par pas de 50kg jusqu'à l'atteinte par exemple de la masse du train avant du groupe motopropulseur le plus lourd pour le type de modèle de véhicule afin de pouvoir valider le modèle de calcul pour toute la gamme du modèle de véhicule.

Pour corréler les résultats du modèle de calcul en fonction des paramètres de températures, la campagne de validation est effectuée généralement selon trois points de température :
- Une température minimale de -40°C avec le véhicule installé dans une chambre froide.
- Une température nominale de 23°C en extérieur.
- Une température maximale de +40°C avec le véhicule installé en soufflerie chaude.

La température estimée en interne de l'unité de contrôle 11 est de manière préférentielle lue par un outil informatique qui permet d'accéder aux variables internes du calculateur.

La température du véhicule est un paramètre important dans le fonctionnement du système d'assistance de direction. Par exemple, selon la figure 4 représentant la tension de courant disponible 43 aux bornes de la batterie 19 en fonction de la température 42 du véhicule, ladite tension croit linéairement depuis une valeur minimale à une température négative de l'ordre de -40°C jusqu'à atteindre la valeur maximale Vmax de la tension à une température positive de l'ordre de 40°C et rester constante et égale à ladite valeur maximale. Ladite valeur de tension minimale disponible est un facteur pour déterminer le couple minimal d'assistance de direction disponible. Le moteur d'assistance 12 de direction peut donc assurer un couple d'assistance de direction variant dans les mêmes proportions en fonction de la température.

Le modèle de calcul prend en compte les variations des besoins d'assistance de direction en fonction de l'angle du volant et de la masse sur le train avant. L'étape de validation comprend des essais comprenant des manoeuvres de butée à butée afin de prendre en compte toute la plage d'angle volant, le véhicule étant disposé sur des surfaces d'adhérence connue ou maximum telles qu'un sol sec ou un sol avec du goudron dur chargé de silex. Le couple conducteur est mesuré par un capteur de couple intégré à l'assistance de direction.

La valeur de saturation A est déterminée grâce au modèle de calcul. La valeur du couple d'assistance de direction est déterminée selon le procédé représenté dans la figure 2 ; ledit procédé comprend les étapes suivantes :
- prise en compte des valeurs des paramètres de fonctionnement issues des mesures (17e, 16e, 24e, 23e) par les moyens de mesure dans le véhicule qui comprennent :
   - des moyens de captation d'effort volant (non représentés),
   - des moyens de mesure 16 de vitesse V du véhicule,
   - des moyens de captation de fonctionnement du moteur 24,
   - des moyens de captation de la température 23 environnant le véhicule.

Les valeurs mesurées d'effort volant, de vitesse du véhicule, de statut du fonctionnement du moteur et de la température extérieure sont adressées alors à l'unité de contrôle 11.
- détermination 30 d'une valeur de saturation A d'assistance de direction en fonction des valeurs des paramètres mesurés et des valeurs de paramètres inscrits en mémoire 40 tels que la masse du train avant du véhicule.
- détermination 31 d'une valeur nominale B de l'assistance de direction.
- comparaison 32 entre la vitesse du véhicule V et le seuil de vitesse S.
- comparaison 33 entre la valeur de saturation A et la valeur nominale B d'assistance de direction et prise en compte de la plus petite des deux valeurs comme valeur de saturation. Ainsi si la valeur calculée de la valeur de saturation A est inférieure à la valeur nominale B d'assistance et le couple d'assistance de direction ne dépassera pas la valeur de saturation A. Dans le cas contraire, le couple d'assistance de direction ne dépassera pas la valeur nominale d'assistance B de direction.
- détermination 34 de la valeur du couple d'assistance de direction pendant la phase d'arrêt automatique inférieure à la valeur de saturation en deçà d'un seuil S de vitesse de roulage du véhicule. Au delà du seuil de vitesse S, le couple d'assistance de direction peut dépasser la valeur de saturation tout en restant inférieur à la valeur nominale d'assistance de direction.

En effet, le moteur étant à l'arrêt, le véhicule est cependant susceptible de rouler, notamment quand il se trouve sur une pente descendante et acquérir une certaine vitesse V. Au-delà dudit seuil de vitesse S, le véhicule est considéré en phase de roulage et le niveau d'assistance de direction retrouve un niveau de couple d'assistance nominale calculé en fonction de mesures de paramètres comprenant la vitesse du véhicule et le couple de la colonne. Les vitesses de roulage du véhicule avec le moteur arrêté sont toutefois relativement faibles et il est préférable de ramener le niveau d'assistance de direction à la valeur nominale pour la sécurité du conducteur lorsque la vitesse V du véhicule excède le seuil S.

Pour des vitesses V de véhicule inférieures audit seuil S, le niveau d'assistance de direction est maintenu en dessous du seuil de saturation, le conducteur sera amené à moins braquer les roues pendant cette phase. Le seuil de vitesse est de manière avantageuse fixé relativement bas par exemple à 5km/h. Ainsi le conducteur n'est pas susceptible d'éprouver une quelconque gêne lors de manoeuvres éventuelles du véhicule à faible vitesse. Le procédé n'est actif que lors d'un arrêt automatique. Au-delà dudit seuil de vitesse S, le niveau d'assistance retrouve le niveau d'assistance optimal.

La validation dudit seuil de vitesse est effectuée par exemple avec le véhicule sur une pente descendante sans démarrage du moteur thermique. En effet, le véhicule est apte à prendre de la vitesse et on vérifie que la valeur de saturation définie à 0 km/h reste valide audit seuil de vitesse pour effectuer des manoeuvres nécessaires. Le seuil de 5km/h est ainsi validé pour appliquer la valeur de saturation.

L'objectif de l'invention est atteint : l'assistance de direction est préservée pendant la phase d'arrêt automatique du moteur et le procédé prévient toute insuffisance de puissance électrique lors du redémarrage automatique du moteur pouvant affecter l'assistance de direction pouvant entrainer des à-coups volant.

L'invention n'est pas réduite aux modes de réalisation présentés ci-avant et l'homme de l'art saura alors apporter des modifications nécessaires à l'utilisation conjointe avec l'invention.

Par exemple, pour certains types de véhicules automobiles, l'assistance de direction peut être inférieure à une valeur de saturation pendant une phase d'arrêt automatique du moteur, ladite valeur de saturation diminuant suivant une courbe définie grâce à des essais de validation et indépendante d'au moins une des valeurs dans une liste comprenant la température du véhicule en prenant par exemple une valeur minimale de tension disponible aux bornes du moteur d'assistance de direction selon la figure 4, l'angle de volant et la masse sur le train avant. Cette solution permet alors de réduire la taille des mémoires de calcul dans l'unité de contrôle ainsi que la charge de calcul de ladite unité de contrôle.

## Revendications

1. Procédé de gestion (10) de l'assistance de direction de moteur à combustion interne (13) de véhicule automobile comprenant :
- un système d'assistance (12) électrique ou électrohydraulique de direction,
- un système d'arrêt/redémarrage automatique du moteur autorisant un maintien de l'assistance de direction pendant une phase d'arrêt automatique jusqu'au redémarrage automatique du moteur,
**caractérisé en ce que** le procédé autorise pendant la phase d'arrêt automatique du moteur d'une séquence d'arrêt/redémarrage automatique un couple d'assistance de direction inférieur à une valeur de saturation (A) d'assistance qui est inférieure à une valeur nominale d'assistance de direction, ledit niveau d'assistance étant adapté à être conservé pendant la phase de redémarrage automatique du moteur.

2. Procédé (10) selon la revendication 1, **caractérisé en ce que** la valeur de saturation (A) est déterminée de manière itérative pendant la phase d'arrêt automatique dudit moteur précédant un redémarrage automatique.

3. Procédé (10) selon l'une quelconque des revendications 1 à 2, caractérisé en que le procédé autorise le couple d'assistance de direction inférieur à la valeur de saturation d'assistance (A) en-deçà d'un seuil de vitesse (S) du véhicule.

4. Procédé (10) selon l'une quelconque des revendications 1 à 3, **caractérisé en ce que** la valeur de saturation d'assistance de direction est déterminée en fonction de l'angle au volant.

5. Procédé (10) selon l'une quelconque des revendications 1 à 4, **caractérisé en ce que** la valeur de saturation (A) diminue lorsque le volant est tourné vers les butées.

6. Procédé (10) selon l'une quelconque des revendications 1 à 5, **caractérisé en ce que** la valeur de saturation (A) diminue lorsque le volant est tourné vers les butées au-delà d'un seuil d'angle volant.

7. Procédé (10) selon l'une quelconque des revendications 1 à 6, **caractérisé en ce que** la valeur de saturation (A) est fonction de la température du véhicule.

8. Procédé (10) selon l'une quelconque des revendications 1 à 7, **caractérisé en ce que** la détermination de la valeur de saturation (A) est effectuée en fonction de différents paramètres compris dans une liste comportant le dimensionnement de la batterie (19) et les efforts sur le train avant (30).

9. Procédé (10) selon l'une quelconque des revendications 1 à 8, **caractérisé en ce que** ledit procédé comprend les étapes suivantes :
- prise en compte des valeurs des paramètres de fonctionnement issues des mesures (17e, 16e, 24e, 23e),
- détermination (30) de la valeur de saturation (A) d'assistance de direction en fonction des valeurs des paramètres mesurés comprenant la température du véhicule et des valeurs de paramètres inscrits en mémoire (40).
- détermination (31) de l'assistance nominale (B) de direction.
- comparaison (33) entre la valeur de saturation et la valeur nominale d'assistance de direction et prise en compte de la plus petite des deux valeurs comme valeur de saturation.
- comparaison (32) de la vitesse du véhicule (V) avec un seuil de vitesse (S) de roulage,
- détermination (34) de la valeur de l'assistance de direction pendant la phase d'arrêt automatique jusqu'au redémarrage automatique et jusqu'à l'atteinte du seuil de vitesse (S) de roulage du véhicule.

10. Système de gestion de l'assistance de direction électrique de véhicule automobile comprenant :
- des moyens de captation d'effort volant,
- des moyens de mesure de vitesse du véhicule (16),
- des moyens de captation (22) de la charge de batterie (19),
- des moyens de captation de fonctionnement du moteur (24),
- des moyens de captation de la température environnant le véhicule (23),
- une unité de contrôle (11),
**caractérisé en ce que** le système autorise une assistance de direction selon le procédé suivant les revendications 1 à 9.

## Patentansprüche

1. Verfahren (10) zum Steuern der durch eine Brennkraftmaschine (13) bewirkten Lenkunterstützung eines Kraftfahrzeugs, das Folgendes umfasst:
- ein elektrisches oder elektrohydraulisches Lenkunterstützungssystem (12),
- ein System für automatischen Stopp/Neustart der Kraftmaschine, das die Aufrechterhaltung der Lenkunterstützung während einer Phase eines automatischen Stopps bis zum automatischen Neustart der Kraftmaschine zulässt,
**dadurch gekennzeichnet, dass** das Verfahren während der Phase eines automatischen Stopps der Kraftmaschine während einer Folge automatischer Stopps/Neustarts ein Lenkunterstützungsdrehmoment zulässt, das kleiner als ein Sättigungswert (A) der Unterstützung ist, der kleiner als ein Lenkunterstützungsnennwert ist, wobei der Unterstützungsgrad so ausgelegt ist, dass er während der Phase des automatischen Neustarts der Kraftmaschine beibehalten wird.

2. Verfahren (10) nach Anspruch 1, **dadurch gekennzeichnet, dass** der Sättigungswert (A) während der Phase des automatischen Stopps der Kraftmaschine, die einem automatischen Neustart vorhergeht, iterativ bestimmt wird.

3. Verfahren (10) nach einem der Ansprüche 1 bis 2, **dadurch gekennzeichnet, dass** das Verfahren unterhalb einer Schwellengeschwindigkeit (S) des Fahrzeugs das Lenkunterstützungsdrehmoment, das kleiner als der Unterstützungssättigungswert (A) ist, zulässt.

4. Verfahren (10) nach einem der Ansprüche 1 bis 3, **dadurch gekennzeichnet, dass** der Lenkunterstützungssättigungswert als Funktion des Lenkwinkels bestimmt wird.

5. Verfahren (10) nach einem der Ansprüche 1 bis 4, **dadurch gekennzeichnet, dass** der Sättigungswert (A) abnimmt, wenn das Lenkrad zu den Anschlägen gedreht wird.

6. Verfahren (10) nach einem der Ansprüche 1 bis 5, **dadurch gekennzeichnet, dass** der Sättigungswert (A) abnimmt, wenn das Lenkrad über einen Lenkschwellenwinkel hinaus zu den Anschlägen gedreht wird.

7. Verfahren (10) nach einem der Ansprüche 1 bis 6, **dadurch gekennzeichnet, dass** der Sättigungswert (A) von der Temperatur des Fahrzeugs abhängt.

8. Verfahren (10) nach einem der Ansprüche 1 bis 7, **dadurch gekennzeichnet, dass** die Bestimmung des Sättigungswertes (A) als Funktion verschiedener Parameter erfolgt, die in einer Liste enthalten sind, die die Dimensionierung der Batterie (19) und die Kräfte auf den vorderen Antriebsstrang (30) umfasst.

9. Verfahren (10) nach einem der Ansprüche 1 bis 8, **dadurch gekennzeichnet, dass** das Verfahren die folgenden Schritte umfasst:
- Berücksichtigen von Werten von Betriebsparametern, die von Messungen (17e, 16e, 24e, 23e) stammen,
- Bestimmen (30) des Lenkunterstützungssättigungswertes (A) als Funktion von Werten von gemessenen Parametern, die die Temperatur des Fahrzeugs und in einen Speicher (40) geschriebene Parameterwerte umfassen,
- Bestimmen (31) der Nenn-Lenkunterstützung (B),
- Vergleichen (33) zwischen dem Sättigungswert und dem Nenn-Lenkunterstützungswert und Berücksichtigen des kleinsten der beiden Werte als Sättigungswert,
- Vergleichen (32) der Fahrzeuggeschwindigkeit (V) mit einem Rollgeschwindigkeitsschwellenwert (S),
- Bestimmen (34) des Lenkunterstützungswertes während der Phase des automatischen Stopps bis zum automatischen Neustart und bis zum Erreichen des Rollgeschwindigkeitsschwellenwerts (S) des Fahrzeugs.

10. System zum Steuern der elektrischen Lenkunterstützung eines Kraftfahrzeugs, das Folgendes umfasst:
- Mittel zum Erfassen der Lenkkraft,
- Mittel zum Messen der Geschwindigkeit des Fahrzeugs (16),
- Mittel (22) zum Erfassen der Ladung der Batterie (19),
- Mittel zum Erfassen des Betriebs der Kraftmaschine (24),
- Mittel zum Erfassen der Umgebungstemperatur des Fahrzeugs (23) und
- eine Steuereinheit (11),
**dadurch gekennzeichnet, dass** das System eine Lenkunterstützung gemäß dem Verfahren nach den Ansprüchen 1 bis 9 zulässt.

## Claims

1. Method (10) of controlling the power-assisted steering of a motor vehicle internal combustion engine (13), comprising:
- an electric or electrohydraulic power-assisted steering system (12),
- an automatic engine stop/restart system, allowing power-assisted steering to be maintained during an automatic stopping phase up to the automatic restart of the engine,
**characterized in that** the method allows, during the automatic engine-stopping phase of an automatic stop/restart sequence, a steering assistance torque less than an assistance saturation value (A) which is less than a nominal steering assistance value, said level of assistance being designed to be maintained during the automatic engine-restart phase.

2. Method (10) according to Claim 1, **characterized in that** the saturation value (A) is determined iteratively during the automatic engine-stopping phase preceding an automatic restart.

3. Method (10) according to either one of Claims 1 and 2, **characterized in that** the method allows the steering assistance torque less than the assistance saturation value (A) below a vehicle speed threshold (S).

4. Method (10) according to any one of Claims 1 to 3, **characterized in that** the steering assistance saturation value is determined as a function of steering wheel angle.

5. Method (10) according to any one of Claims 1 to 4, **characterized in that** the saturation value (A) decreases when the steering wheel is turned toward the end stops.

6. Method (10) according to any one of Claims 1 to 5, **characterized in that** the saturation value (A) decreases when the steering wheel is turned towards the end stops beyond a steering wheel angle threshold.

7. Method (10) according to any one of Claims 1 to 6, **characterized in that** the saturation value (A) is a function of vehicle temperature.

8. Method (10) according to any one of Claims 1 to 7, **characterized in that** the saturation value (A) is determined as a function of various parameters comprised in a list including the size of the battery (19) and the load on the front axle assembly (30).

9. Method (10) according to any one of Claims 1 to 8, **characterized in that** said method comprises the following steps:
- consideration of the values of the operating parameters which values are derived from the measurements (17e, 16e, 24e, 23e),
- determination (30) of the steering assistance saturation value (A) as a function of the values of the measured parameters comprising the vehicle temperature and of the values of parameters written to the memory (40),
- determination (31) of the nominal steering assistance (B),
- comparison (33) between the saturation value and the nominal value of the steering assistance and consideration of the smaller of the two values as being the saturation value,
- comparison (32) of the vehicle speed (V) with a running speed threshold (S),
- determination (34) of the steering assistance value, during the automatic-stopping phase up to the automatic restart and until the vehicle running speed threshold (S) is reached.

10. System of controlling the electric steering assistance of a motor vehicle, comprising:
- means of sensing steering wheel load,
- means of measuring the speed of the vehicle (16),
- means of sensing (22) the charge of the battery (19),
- means of sensing the operation of the engine (24),
- means of sensing the temperature surrounding the vehicle (23),
- a control unit (11),
**characterized in that** the system allows steering assistance according to the method according to Claims 1 to 9.
